# FASCICULE DE BREVET EUROPEEN

(11) **EP 0 637 733 B1**
(45) Date de publication et mention de la délivrance du brevet: **20.09.2000**
(21) Numéro de dépôt: 94111247.6
(22) Date de dépôt: 19.07.1994
(51) Int. Cl.: G01K 7/25

(54) **Dispositif de mesure de la température**
Temperaturmessvorrichtung
Temperature measuring device

(30) Priorité: 02.08.1993 FR 9309591
(43) Date de publication de la demande: 08.02.1995
(73) Titulaire: SIEMENS AUTOMOTIVE S.A., 31036 Toulouse Cédex (FR)
(72) Inventeur: Tornare, Jean-Marc, F-31200 Toulouse (FR)
(74) Mandataire: Zedlitz, Peter, Dipl.-Inf.

(56) Documents cités:
- EP-A- 0 108 325
- WO-A-91/08441

## Description

La présente invention concerne un dispositif de mesure de la température. Plus particulièrement, un tel dispositif est destiné à être mis en place dans un véhicule automobile pour informer un calculateur électronique de la température régnant dans une zone à surveiller. Une telle zone est par exemple un circuit de refroidissement ou l'intérieur d'une tubulure d'admission d'air.

Il est déjà connu d'utiliser des capteurs de température dont la résistance varie en fonction de la température du milieu dans lequel ils sont plongés. En mesurant cette variation de résistance et après traitement du signal de mesure, on obtient une valeur numérique N représentative de la température mesurée.

De manière classique, en ce qui concerne les capteurs de température à coefficient de température négatif (encore appelé capteurs CTN), on soumet à une tension Vo un capteur et une résistance montée en série et reliée au pôle positif de la source de tension. Un signal analogique de mesure pris en un point milieu, situé entre la résistance et le capteur, est envoyé vers un convertisseur analogique/numérique. Ce convertisseur reçoit également une tension de référence, de manière à générer une valeur numérique N représentative de la température mesurée.

De tels dispositifs de mesure de la température présentent un inconvénient majeur, à savoir : il leur est difficile de mesurer avec une grande précision une température variant sur une plage étendue.

Pour pallier cet inconvénient, il est connu de commuter la tension de référence du convertisseur analogique numérique entre plusieurs tensions de référence distinctes. A chaque tension de référence correspond une plage de température mesurée. On obtient ainsi plusieurs échelles de température pour suivre avec précision une température variant sur une plage étendue. Par exemple, dans le domaine automobile, cette température peut varier d'environ -40°C à +140°C.

L'inconvénient de tels dispositifs à tensions de référence multiple, est qu'il faut fournir plusieurs sources de tensions de référence étalonnées avec précision.

Ceci entraîne un surcoût trop important. De plus, lorsque la tension de référence décroît, le rapport signal/bruit se dégrade.

Il est également déjà connu de faire varier la résistance montée en série avec le capteur (par commutation de résistances en parallèle) pour améliorer le suivi de la température selon différente échelles de températures. Cependant, cette technique présente l'inconvénient de faire varier le courant passant à l'intérieur de la branche de mesure, et surtout elle introduit des erreurs provenant des tensions de déchets et des courants de fuite des transistors.

Le but de la présente invention est de pallier l'ensemble de ces inconvénients et de créer un dispositif permettant une mesure de température sur une plage étendue avec une grande précision et une bonne résolution, et ce sans perturber les courbes de conversion du convertisseur et sans augmenter de manière significative le coût du dispositif.

A cet effet, la présente invention concerne un dispositif de mesure de la température régnant dans une zone à surveiller, ledit dispositif étant du genre comportant :
- une chaîne de mesure alimentée sous une tension Vo comprenant :
   * un capteur de température à résistance variable adapté pour générer un signal analogique représentatif de la température mesurée dans la zone à surveiller,
   * et une résistance montée en série avec le capteur d'une part et reliée à la borne positive de la tension d'alimentation d'autre part, ladite résistance coopérant avec le capteur pour générer un signal analogique de mesure,
- et un moyen de traitement du signal de mesure comprenant un convertisseur analogique/numérique adapté pour recevoir notamment le signal analogique de mesure et une tension de référence pour générer en réponse une valeur numérique N représentative de la température mesurée.

Le dispositif selon l'invention est caractérisé en ce qu'il comporte en outre :
- une pluralité de résistances montées en série avec la résistance de la chaîne de mesure,
- et un moyen de sélection adapté :
   * pour sélectionner une tension de référence prélevée en un point de la pluralité de résistances montées en séries,
   * et pour délivrer cette tension de référence sélectionnée vers le convertisseur analogique/numérique.

Grâce à de telles dispositions, la température est mesurée avec précision quelle que soit sa valeur. En effet, la sélection de la tension de référence permet d'effectuer les changements d'échelles nécessaires pour mesurer finement toute variation de la résistance variable du capteur.

Lorsque la température mesurée sort de la première plage de mesure sélectionnée, il suffit de sélectionner une autre tension de référence pour pouvoir la suivre tout au long d'une autre plage avec une bonne précision.

Avantageusement, la chaîne de mesure constituée par la pluralité de résistances et le capteur est toujours traversé par le même courant. De ce fait, le changement de source de tension de référence s'effectue avec des perturbations minimes ce qui n'entraîne pas de modifications des courbes de conversion au moment d'un changement de référence. En outre, on notera que la réalisation de la pluralité de sources de tensions est aisée et peu onéreuse.

Selon un mode préférentiel de réalisation, un circuit de dérivation est mis en place, en parallèle avec chaque résistance ou groupe de résistances de la pluralité de résistances. Chaque circuit de dérivation comporte au moins un transistor. De ce fait, lorsque le transistor placé en parallèle avec une résistance est conducteur, il court-circuite complètement cette résistance et seules les résistances restantes sont soumises à la tension d'alimentation. L'intérêt de tels circuits de dérivation réside dans le fait que la tension de référence n'est pas perturbée par la tension collecteur-émetteur V_{CE} sat du transistor, et que la ou les résistances mises en court-circuit ne perturbent pas la mesure.

D'autres objets, caractéristiques et avantages de la présente invention ressortiront d'ailleurs de la description qui va suivre, à titre d'exemple non limitatif, en référence aux dessins annexés dans lesquels :
- la figure 1 : est une vue schématique en plan du dispositif de mesure selon un premier mode de réalisation de l'invention,
- et la figure 2 : est une vue schématique en plan du dispositif de mesure selon un second mode de réalisation de l'invention.

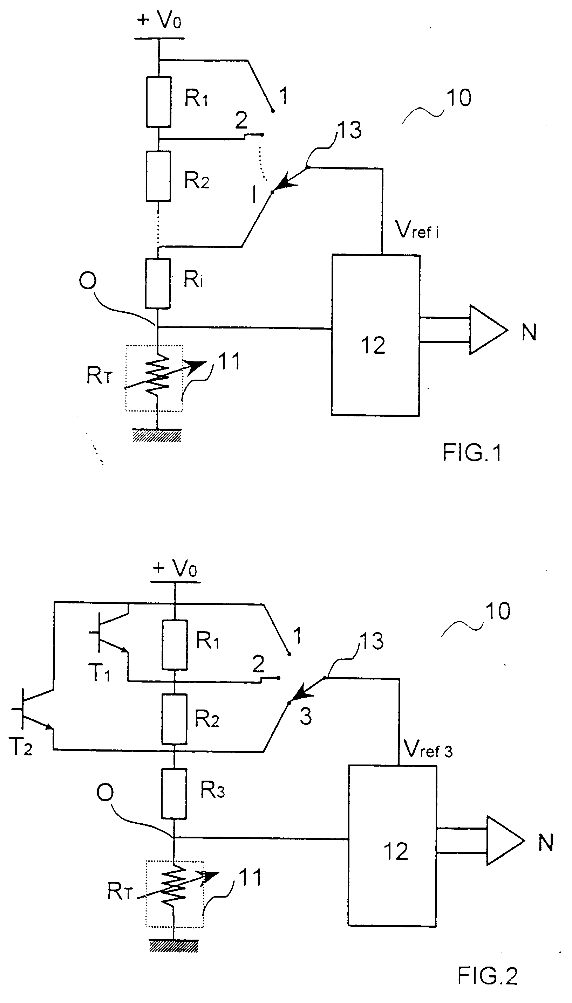

Selon la forme de réalisation représentée à la figure 1, le dispositif de mesure de la température 10 selon l'invention comporte notamment une sonde de température 11 munie d'une résistance variable R_{T}. Cette résistance variable est montée en série avec une pluralité de résistances R₁ à Rᵢ. Cette pluralité de résistances est reliée à la borne positive d'une tension d'alimentation Vo.

Un convertisseur analogique/numérique 12 est adapté pour recevoir un signal analogique de mesure pris au point milieu O entre la résistance variable R_{T} et l'ensemble des résistances R₁, R₂, ...Rᵢ montées en série. Ce convertisseur 12 reçoit également une tension de référence Vrefᵢ (dans l'exemple représenté).

Un sélecteur multipositions 13 permet de délivrer au convertisseur 12 des tensions de référence distinctes Vréf₁, Vréf₂, ...Vréfᵢ selon que le sélecteur contacte les plots 1, 2 ou ....I.

Le fonctionnement d'un tel dispositif de mesure est décrit ci-après.

Lorsque la sonde 11 est plongée dans un milieu dont la température varie, la résistance variable R_{T} varie également. Dans le cas représenté, la sonde 11 utilisée est une sonde à coefficient de température négatif (CTN). De ce fait, une augmentation de la température à mesurer provoque une diminution de la résistance variable R_{T}. Comme il est préférable que le point de mesure O (permettant d'obtenir le signal analogique de mesure à envoyer au convertisseur 12) soit un point milieu, il est nécessaire en conséquence de diminuer la résistance équivalente (R₁ + R₂ + ...Rᵢ) pour rester à ce point d'équilibre. Donc si au départ la tension de référence Vref₁ est prise sur le plot 1, il convient de passer au plot 2 pour envoyer au convertisseur la tension de référence Vref₂ et ainsi augmenter l'échelle de mesure. Lorsque la résistance variable R_{T} diminue encore la tension de référence est prise sur le pot 3...et ainsi de suite.

Le convertisseur 12 reçoit le signal analogique de mesure pris en O, et la tension de référence Vrefᵢ (dans l'exemple représenté) correctement sélectionnée, pour calculer et délivrer une valeur numérique N représentative de la température régnant dans la zone surveillée par la sonde.

Un tel dispositif de mesure permet donc de suivre l'évolution de la température d'une zone à surveiller, sur une plage de température étendue, tout en assurant une bonne précision et une bonne résolution, par changement approprié de la tension de référence.

Le basculement du sélecteur 13 sur chacun des plots (1, 2, ...I) est commandé par une unité centrale de calcul (non représentée), qui détermine en fonction de la température mesurée, la tension de référence Vref_{1...i} à sélectionner.

On notera que le présent dispositif permet de réaliser un multiplexage de la tension de référence du convertisseur analogique/numérique entre plusieurs valeurs qui ne sont pas fixes, mais fonction de la température à mesurer. En effet, ces valeurs de tension de référence sont prélevées sur des points de la pluralité de résistances alimentant le capteur 11. En outre, comme le nombre de résistance montées en série est modifiable à volonté, il est possible pour chaque zone de température à surveiller, d'obtenir la meilleure dynamique possible du signal analogique de mesure. La meilleure optimisation est obtenue lorsque la résistance variable R_{T} est égale à la somme des résistances de la pluralité de résistances.

La figure 2 montre un second mode de réalisation de l'invention, dans lequel on cherche à minimiser les perturbations des courbes de conversion dues aux différents changements d'échelles de référence. Dans le cas représenté, on a choisi d'utiliser trois résistances en série R₁, R₂ et R₃.

En parallèle avec chaque résistance ou groupes de résistances R₁, R_{2,} R₃, on constitue un circuit de dérivation. Le premier circuit de dérivation comprend un transistor T₁, monté en parallèle avec R₁ et le second circuit de dérivation comprend un transistor T₂ monté en parallèle avec R₁ et R₂.

Lorsque le transistor T₁ est conducteur, la résistance R₁ est mise en court circuit et la tension d'alimentation Vo, est amenée directement aux bornes des résistances R₂ et R₃. Lorsque le transistor T2 conduit, les résistances R₁ et R₂ sont mises en court-circuit. Lorsque les transistors T₁ et T₂ sont bloqués, c'est l'ensemble des résistances R₁, R₂ et R₃ qui est soumis à la tension Vo.

L'intérêt d'un tel montage, avec des circuits de dérivations, est que la tension d'alimentation Vo est directement appliquée aux bornes de la (ou des) résistance(s) sélectionnée(s), et que notamment le signal analogique de mesure n'est pas perturbé par la tension collecteur-émetteur V_{CE} sat du ou des transistors conducteur(s).

Quelque soit le mode de réalisation choisi, le dispositif de mesure selon l'invention permet ainsi d'améliorer le rapport signal de mesure analogique/bruit ce qui permet une meilleure détermination de la valeur N. En outre, la détermination de N est indépendante des variations de la tension d'alimentation Vo.

Bien entendu, la présente invention n'est pas limitée aux modes de réalisation ci-dessus décrits. Ainsi le dispositif selon l'invention peut comporter un nombre quelconque de résistances montées en série et de circuits de dérivation correspondant. De même, le nombre de tensions de référence possible peut être différent de celui représenté.

## Revendications

1. Dispositif de mesure de la température régnant dans une zone à surveiller, ledit dispositif étant du genre comportant :
- une chaîne de mesure alimentée sous une tension d'alimentation Vo et comprenant :
* un capteur de température (11) à résistance variable (R_{T}) adapté pour générer un signal analogique représentatif de la température mesurée dans la zone à surveiller,
* et une résistance (Rᵢ) montée en série avec le capteur d'une part et reliée à la borne positive de la tension d'alimentation Vo d'autre part, ladite résistance coopérant avec le capteur pour générer un signal analogique de mesure,
- et un moyen de traitement du signal de mesure comprenant un convertisseur analogique/numérique (12) adapté pour recevoir notamment le signal analogique de mesure et une tension de référence Vref pour générer en réponse une valeur numérique N représentative de la température mesurée,
ledit dispositif étant caractérisé en ce qu'il comporte en outre :
- une pluralité de résistances (R₁,...Rᵢ₋₁) montées en série avec la résistance Rᵢ,
- et un moyen de sélection (13) adapté pour sélectionner une tension de référence prélevée en un point de la pluralité de résistances (R₁,...Rᵢ), et pour délivrer cette tension de référence sélectionnée vers le convertisseur analogique/numérique (12).

2. Dispositif de mesure selon la revendication 1, caractérisé en ce qu'il comporte en outre au moins un circuit de dérivation, monté en parallèle aux bornes de la ou des résistances (R₁...Rᵢ) délivrant la tension de référence au convertisseur (12).

3. Dispositif de mesure selon la revendication 1 ou 2, caractérisé en ce que chaque circuit de dérivation comporte un transistor.

## Claims

1. Device for measuring the temperature prevailing in a zone to be monitored, said device being of the type comprising:
- a measurement system supplied with a supply voltage Vo and comprising:
- a temperature sensor (11) with variable resistance (R_{T}) adapted to generate an analogue signal representative of the temperature measured in the zone to be monitored,
- and a resistor (Rᵢ) connected in series with the sensor, on the one hand, and connected to the positive terminal of the supply voltage Vo on the other hand, said resistor cooperating with the sensor so as to generate an analogue measurement signal,
- and a measurement signal processing means comprising an analogue/digital converter (12) adapted to receive, in particular, the analogue measurement signal and a reference voltage Vref in order to generate, in response, a digital value N representative of the measured temperature,
said device being characterised in that it also comprises:
- a plurality of resistors (R₁,...Rᵢ₋₁) connected in series with the resistor Rᵢ,
- and a selection means (13) adapted to select a reference voltage taken at a point in the plurality of resistors (R₁,...Rᵢ) and to deliver this selected reference voltage to the analogue/digital converter (12).

2. Measuring device according to claim 1, characterised in that it also comprises at least one branch circuit connected in parallel to the terminals of the resistor(s) (R₁,...Rᵢ) supplying the reference voltage to the converter (12).

3. Measuring device according to claim 1 or 2, characterised in that each branch circuit comprises a transistor.

## Patentansprüche

1. Vorrichtung zum Messen der Temperatur, die in einem zu überwachenden Bereich herrscht, wobei die Vorrichtung von einer Bauart ist, welche aufweist:
- eine Meßkette, die mit einer Versorgungsspannung Vo gespeist wird und aufweist:
* einen Temperatursensor (11) veränderlichen Widerstandes (R_{T}) zum Erzeugen eines analogen Signals, das die in dem zu überwachenden Bereich gemessene Temperatur darstellt,
* und einen Widerstand (Rᵢ), der einerseits mit dem Sensor in Reihe geschaltet ist und andererseits mit dem positiven Anschluß der Versorgungsspannung Vo verbunden ist, wobei der Widerstand mit dem Sensor zusammenwirkt, um ein analoges Meßsignal zu erzeugen,
- und ein Mittel zur Aufbereitung des Meßsignals, mit einem Analog/Digitalwandler (12), der dazu dient, insbesondere das analoge Meßsignal und eine Bezugsspannung Vref zu empfangen, um in Abhängigkeit hiervon einen für die gemessene Temperatur darstellenden numerischen Wert N zu erzeugen,
wobei die Vorrichtung dadurch gekennzeichnet ist, daß sie ferner aufweist:
- eine Gruppe von Widerständen (R₁, ... Rⱼ₋₁), die mit dem Widerstand Rⱼ in Reihe geschaltet sind,
- und ein Wählermittel (13) zum Wählen einer Bezugsspannung, die an einem Punkt der Gruppe von Widerständen (R₁, ... Rⱼ) abgegriffen wird, und zum Abgeben dieser ausgewählten Bezugsspannung an den Analog/Digitalwandler (12).

2. Meßvorrichtung nach Anspruch 1, dadurch gekennzeichnet, daß sie ferner mindestens eine Ableitungsschaltung aufweist, die mit den Anschlüssen des Widerstandes oder der Widerstände (R₁, ... Rᵢ) parallel geschaltet ist, welche die Bezugsspannung an den Wandler (12) abgeben.

3. Meßvorrichtung nach Anspruch 1 oder 2, dadurch gekennzeichnet, daß jeder Ableitungsschaltung einen Transistor aufweist.
